# EUROPÄISCHE PATENTSCHRIFT

(11) **EP 4 081 414 B1**
(45) Veröffentlichungstag und Bekanntmachung des Hinweises auf die Patenterteilung: **16.10.2024**
(21) Anmeldenummer: 21707964.9
(22) Anmeldetag: 23.02.2021
(51) Int. Cl.: B60G 11/26, B60G 21/067, B60G 21/10, F15B 1/00

(54) **ANSTEUERVORRICHTUNG**
CONTROL APPARATUS
APPAREIL DE COMMANDE

(30) Priorität: 13.03.2020 DE 102020001713
(43) Veröffentlichungstag der Anmeldung: 02.11.2022
(73) Patentinhaber: Hydac Mobilhydraulik GmbH, Sulzbach/Saar (DE)
(72) Erfinder: HUTH, Heinz-Peter, 66802 Überherrn (DE); MERSCHER, Johannes, 66265 Heusweiler (DE)
(74) Vertreter: Bartels und Partner, Patentanwälte
(86) Internationale Anmeldenummer: PCT/EP2021/054449
(87) Internationale Veröffentlichungsnummer: WO 2021/180463

(56) Entgegenhaltungen:
- EP-A1- 1 769 951
- EP-A1- 3 590 740
- WO-A1-2012/009208
- WO-A1-2017/092855
- WO-A1-2019/054352
- WO-A1-2019/238534
- GB-A- 2 564 763
- US-A- 4 099 733
- US-A1- 2001 024 021

## Beschreibung

Die Erfindung betrifft eine Ansteuervorrichtung für eine pendelnd ausgeführte Achsfederung, insbesondere Vorderachsfederung, mit den Merkmalen des Anspruchs 1.

Durch DE 10 2004 040 636 A1 ist eine Ansteuervorrichtung für eine Federungsvorrichtung bekannt, insbesondere für Fahrzeuge mit sich ändernden Lastverhältnissen, mit einer Achsfederung mit
- mindestens einem Federungszylinder, der jeweils Druckräume wie einen Ringraum und einen Kolbenraum aufweist;
- einem Load-Sensing-System zur Druckerzeugung;
- zwei Hauptzweige bildenden Versorgungsleitungen zwischen diesen Räumen und einem Pumpen- sowie einem Tankanschluss, wobei in jeden Hauptzweig ein Ventil geschaltet ist, von denen mindestens ein Ventil ein Druckregelventil ist, über das die Druckeinstellung für den jeweiligen vorgebbaren Druckraum des jeweiligen Federungszylinders erfolgt; und
- einer Niveauregulierung.

Mit der bekannten Lösung ist es möglich, durch Variieren des ringseitigen Druckes für den jeweiligen Federungszylinder eine andere Federkennlinie einzustellen, wobei die Möglichkeit besteht, diese bereits von vornherein im Rahmen einer konzeptionellen Auslegung zwischen Betriebsgrenzen für die Federkennlinien definiert festzulegen.

Die dahingehend bekannte Achsfederung ist nicht pendelnd ausgelegt, so dass dergestalt für solche Pendelbewegungen auch keine Wankstabilisierung vorgesehen ist. Es sind zwar in der Praxis Vorderachsfederungen auf Basis einer Einzelradfederung realisiert, die einen pendelnden Betrieb der Vorderachse ermöglichen und insoweit auch eine Wankstabilisierung nebst Sperren und Freigeben der Achsfederung vorsehen; allein die dahingehend bekannten Lösungen benötigen eine Vielzahl von Einzelventilen, die miteinander sinnfällig agieren müssen, was die Funktionssicherheit beeinträchtigt. Des Weiteren ist aufgrund der Vielzahl der eingesetzten, einzelnen Ventilkomponenten die Realisierung der bekannten Lösungen aufwändig und mithin kostenintensiv.

Des Weiteren ist durch DE 10 2015 015 685 A1 eine Ventilvorrichtung bekannt, bestehend aus mindestens einem in einem Ventilgehäuse mittels eines Elektromotors entlang einer Verfahrachse längsverfahrbar angeordneten Ventilkolben, der im Ventilgehäuse angeordnete Fluidanschlussstellen, wie einen Druckversorgungsanschluss sowie zwei Nutzanschlüsse für einen hydraulischen Verbraucher zumindest teilweise miteinander verbindet oder voneinander trennt, so dass sich dergestalt über einen konventionellen Elektromotor bei entsprechender Ansteuerung mittels einer zuordenbaren Rechnereinheit der Ventilkolben innerhalb des Ventilgehäuses für einen sinnfälligen Betrieb positionsgenau ansteuern lässt.

Die US 2001/0024021 A1 beschreibt eine Ansteuervorrichtung für eine pendelnd ausgeführte Achsfederung, insbesondere Vorderachsfederung, die Ansteuervorrichtung bestehend aus mindestens einer Hydrospeichereinrichtung, einer Federungseinrichtung und einem Ventil, an das über Fluidanschlussstellen die beiden Einrichtungen angeschlossen sind, wobei das Ventil derart die Fluidanschlussstellen ansteuert, dass in mindestens einer Funktionsstellung des Ventilkolbens bei gesperrter Federung die Achspendelung und in mindestens einer weiteren zweiten Funktionsstellung des Ventilkolbens bei gesperrter Achspendelung die Federung erfolgt.

Weitere Ansteuervorrichtungen gehen aus der GB 2 564 763 A, der EP 3 590 740 A1, der US 4 099 733 A und der EP 1 769 951 A1 hervor. Proportionalventile werden in der WO 2019/238534 A1, der WO 2012/ 009208 A1, der WO 2017/092855 A1 und der WO 2019/054352 A1 offenbart.

Ausgehend von diesem Stand der Technik liegt der Erfindung die Aufgabe zugrunde, die bekannte Ansteuervorrichtung dahingehend weiter zu verbessern, dass mit wenig Komponenten in kostengünstiger Weise eine pendelnd ausgeführte Achsfederung, insbesondere Vorderachsfederung, erhalten ist, die darüber hinaus funktionssicher im Gebrauch ist.

Eine dahingehende Aufgabe löst eine Ansteuervorrichtung mit den Merkmalen des Patentanspruchs 1 in seiner Gesamtheit.

Gemäß dem Anspruch 1 ist vorgesehen, dass das Ventil als Proportionalventil ausgeführt ist, dass ein Ventilkolben von einem Elektromotor betätigbar in einem Ventilgehäuse des Proportionalventils längsverfahrbar geführt ist, und dass in einer weiteren dritten Funktionsstellung des Ventilkolbens die Achspendelung und ein Druckausgleich zwischen der Hydrospeichereinrichtung und der Federungseinrichtung erfolgen. Dadurch, dass der Ventilkolben von einem Elektromotor betätigbar in einem Ventilgehäuse des Pilotventils längsverfahrbar geführt ist und derart die Fluidanschlussstellen ansteuert, dass in mindestens einer Funktionsstellung des Ventilkolbens bei gesperrter Federung die Achspendelung und in mindestens einer weiteren zweiten Funktionsstellung des Ventilkolbens bei gesperrter Achspendelung die Federung erfolgt, lassen sich dem Grunde nach mit nur einem einzelnen von dem Elektromotor ansteuerbaren Proportionalventil alle die für das Pendeln und Federn der Achsfederung notwendigen Stellvorgänge einschließlich Sperren derselben durchführen. Das hat so keine Entsprechung im Stand der Technik.

Durch den proportionalen Übergang von der ersten Funktionsstellung des Ventilkolbens, in der bei gesperrter Federung die Achspendelung erfolgt, zu der zweiten Funktionsstellung, in der bei gesperrter Achspendelung die Federung erfolgt, ist ein Druckausgleich zwischen der Hydrospeichereinrichtung und der Federungseinrichtung erzielt. Dadurch ist die erste Funktionsstellung des Ventilkolbens zwecks des Druckausgleiches "schieberdicht" ausbildbar, ohne ein Vorsehen von Einrichtungen zur Reduzierung des Strömungsquerschnitts, wie beispielsweise Düsen, in einem Bypass. Zudem lässt sich durch die Proportionalität des Ventils eine veränderbare Dämpfung der Federung erreichen. Ferner sind die Übergänge zwischen den einzelnen Funktionsstellungen "harmonisch" gestaltet, so dass unerwünschte, ruckartige Bewegungen der zugehörigen Arbeitsmaschine vermieden sind.

In einer weiteren dritten Funktionsstellung des Ventilkolbens erfolgt die Achspendelung und ein Druckausgleich zwischen der Hydrospeichereinrichtung und der Federungseinrichtung. Dadurch ist eine Dämpfung der Federungseinrichtung bei gleichzeitiger Achspendelung erzielbar.

Bei einem weiteren bevorzugten Ausführungsbeispiel ist vorgesehen, dass in einer weiteren vierten Funktionsstellung des Ventilkolbens sowohl die Achspendelung als auch die Federung erfolgt.

Bei einem weiteren bevorzugten Ausführungsbeispiel ist vorgesehen, dass in einer optionalen, zusätzlichen Funktionsstellung eine proportionale Dämpfung für die Federungseinrichtung bei gesperrter Achspendelung erfolgt.

Bei einem weiteren bevorzugten Ausführungsbeispiel ist vorgesehen, dass die Hydrospeichereinrichtung aus zwei, vorzugsweise gleich ausgebildeten, Hydrospeichern gebildet ist, die mit ihrer Flüssigkeitsseite an jeweils eine Fluidanschlussstelle im Ventilgehäuse angeschlossen sind, und dass der Ventilkolben die jeweilige fluidführende Verbindung zu zwei weiteren Fluidanschlussstellen im Ventilgehäuse ansteuert, an die jeweils ein Federungszylinder der Federungseinrichtung, vorzugsweise mit seiner Kolbenseite, angeschlossen ist.

Bei einem weiteren bevorzugten Ausführungsbeispiel ist vorgesehen, dass das Ventilgehäuse zwei zusätzliche mittels des Ventilkolbens ansteuerbare und in mindestens einer der Funktionsstellungen sperrbare Fluidanschlussstellen aufweist, von denen eine an die Kolbenseite des einen Federungszylinders und die andere an die Kolbenseite des anderen Federungszylinders angeschlossen ist. Durch die dahingehende Ausbildung des Proportionalventils mit Mehranschlusstechnik eignet sich dieses besonders für große Volumenströme.

Bei einem weiteren bevorzugten Ausführungsbeispiel ist vorgesehen, dass der Elektromotor über ein in einem Getrieberaum angeordnetes Getriebe an einem Ritzeltrieb des Ventilkolbens angreift, der von einem Längskanal durchgriffen einen Druckausgleich zwischen dem Getrieberaum und einem Tank- oder Rücklaufanschluss im Ventilgehäuse herstellt. Durch den Druckausgleich ist der Ventilkolben druckausgeglichen in seine Funktionsstellungen bringbar, der mittels des Elektromotors über den Ritzeltrieb mit einer besonders hohen Auflösung bezogen auf die Fluidanschlussstellen verfahrbar ist.

Bei einem weiteren bevorzugten Ausführungsbeispiel ist vorgesehen, dass der Elektromotor von einer Rechnereinheit ansteuerbar ist, die zumindest Sensorinformationen von mindestens zwei Drucksensoren erhält, die jeweils in eine fluidführende Verbindung zwischen dem Ventilkolben und dem jeweiligen Federungszylinder und/oder dem Ventilkolben und dem jeweiligen Hydrospeicher geschaltet sind. Mittels eines jeweiligen, an die Fluidverbindung zwischen dem Ventilkolben und dem jeweiligen Federungszylinder angeschlossenen Drucksensors ist der Zylinderdruck in diesem Federungszylinder erfassbar, wodurch indirekt die Achslast ermittelbar ist. Mittels eines derartigen Drucksensors und zusätzlich eines jeweiligen, an die Fluidverbindung zwischen dem Ventilkolben und dem jeweiligen Hydrospeicher angeschlossenen Drucksensors, der mit diesem Federungszylinder mittels des Proportionalventils verbindbar ist, ist der Differenzdruck im gesperrten Zustand der Federung ermittelbar zwecks Überprüfung bzw. Überwachung eines Druckausgleichs. Dies verbessert die funktionale Sicherheit. Der jeweilige Sensor kann Teil des jeweiligen Hydrospeichers bzw. des jeweiligen Federungszylinders sein, insbesondere in diesem angeordnet sein.

Vorzugsweise ist ferner vorgesehen, dass der Elektromotor den Ventilkolben in zwei gegenläufig zueinander angeordnete Verfahrrichtungen im Ventilgehäuse verfährt. Derart ist eine kompaktaufbauende Ventilkonstruktion ermöglicht.

Dadurch, dass vorzugsweise der Elektromotor mit seinem Getriebegehäuse in einem Antriebsgehäuse aufgenommen an einer Stirnseite des Ventilgehäuses von Fluidanschlussstellen freigelassen angeordnet ist, ist die Ansteuervorrichtung besonders raumsparend ausgebildet und in Nebeneinanderanordnung mit anderen Ansteuervorrichtungen unter Bildung von Steuerblöcken verbindbar.

Für die Betätigung des Ventilkolbens mittels des Elektromotors ist eine Steuereinheit in Form einer integrierten Elektronik (On Board Electronics, OBE) an dem Ventil vorsehbar, die an einen CAN-Bus angeschlossen den Elektromotor ansteuert. Durch eine derartige integrierte Elektronik werden zwei Leistungsausgänge am Controller frei und der Montage- und Verdrahtungsaufwand ist reduziert. Zudem ist die Leistungsaufnahme für eine Verfahrbewegung des Ventilkolbens gering. Zusätzlich ist es durch die dahingehende Ausbildung der Betätigungseinrichtung des Ventilkolbens möglich, dass der Ventilkolben solange in seiner aktuellen Funktionsstellung verbleibt, beispielsweise in einem stromlosen Zustand der Betätigungseinrichtung, bis dieser mittels des Elektromotors in eine andere Stellung gebracht wird, was sich energetisch als günstig erweist und was die Ansteuervorrichtung zusätzlich in ihrer Sicherheit verbessert.

Im Folgenden wird die erfindungsgemäße Ansteuervorrichtung anhand der Zeichnung näher erläutert. Dabei zeigen in prinzipieller und nicht maßgeblicher Darstellung die
- Fig. 1: in der Art eines hydraulischen Schaltplans ein erstes Ausführungsbeispiel der erfindungsgemäßen Ansteuervorrichtung;
- Fig. 2: in der Art eines hydraulischen Schaltplans ein zweites Ausführungsbeispiel der erfindungsgemäßen Ansteuervorrichtung; und
- Fig. 3: einen Längsschnitt durch ein Proportionalventil, wie es Gegenstand des ersten Ausführungsbeispiels aus Fig. 1 ist.

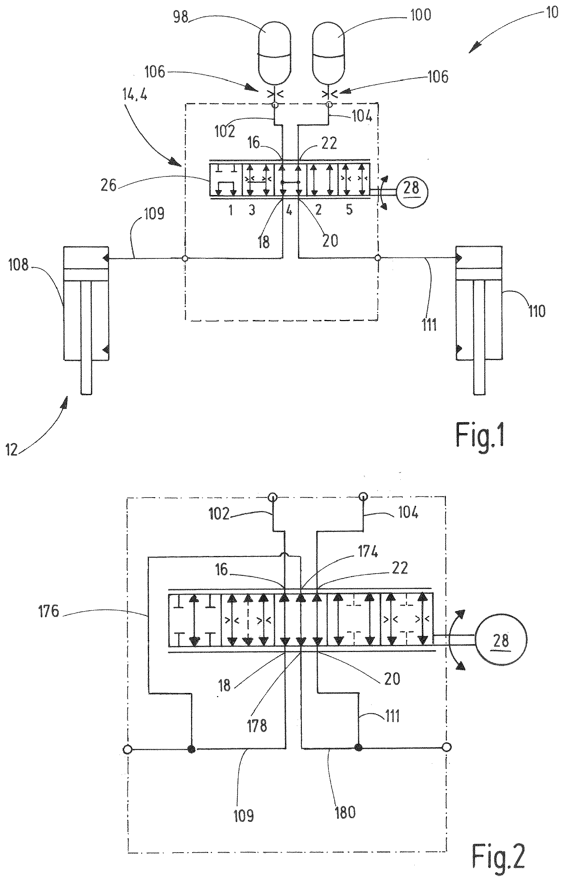

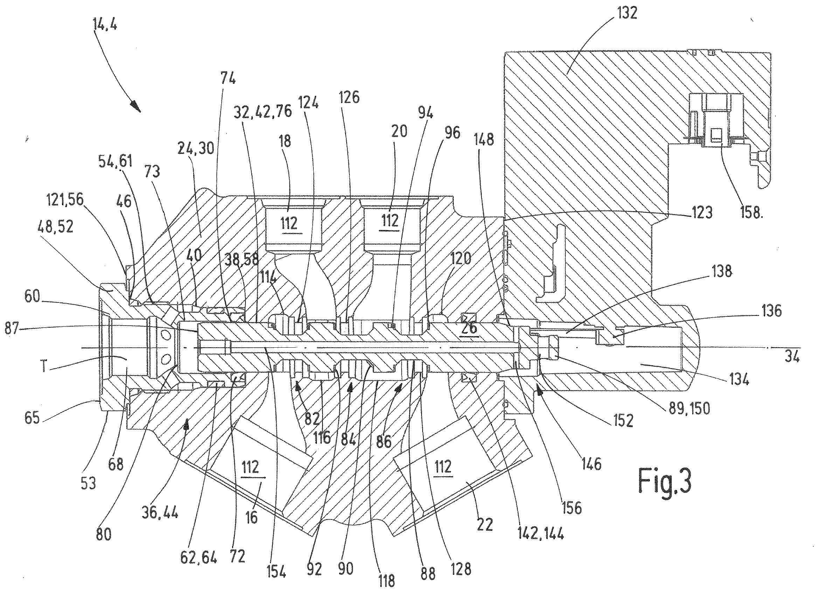

Fig. 1 und 3 betreffen ein erstes Ausführungsbeispiel einer erfindungsgemäßen Ansteuervorrichtung für eine pendelnd ausgeführte Achsfederung in Form einer Vorderachsfederung. Die Ansteuervorrichtung weist eine Hydrospeichereinrichtung 10, eine Federungseinrichtung 12 und ein Proportionalventil 14 auf. Die Hydrospeichereinrichtung 10 und die Federungseinrichtung 12 sind an Fluidanschlussstellen 16, 18, 20, 22 des Proportionalventils 14 angeschlossen.

Das Proportionalventil 14 weist ein Ventilgehäuse 24 auf, in dem ein Ventilkolben 26 längsverfahrbar geführt ist. Der Ventilkolben 26 ist von einem Elektromotor 28 betätigbar und steuert die Fluidanschlussstellen 16, 18, 20, 22 derart an, dass in einer ersten Funktionsstellung des Ventilkolbens 26 bei gesperrter Federung die Achspendelung aktiviert ist und in einer zweiten Funktionsstellung des Ventilkolbens 26 bei gesperrter Achspendelung die Federung aktiviert ist.

Des Weiteren steuert der Ventilkolben 26 die Fluidanschlussstellen 16, 18, 20, 22 derart an, dass in einer dritten Funktionsstellung des Ventilkolbens 26 die Achspendelung aktiviert ist und ein Druckausgleich zwischen der Hydrospeichereinrichtung 10 und der Federungseinrichtung 12 erfolgt. Zudem ist eine vierte Funktionsstellung des Ventilkolbens 26 vorgesehen, in der sowohl die Achspendelung als auch die Federung aktiviert ist. Zusätzlich weist der Ventilkolben 26 eine fünfte Funktionsstellung auf, in der eine proportionale Dämpfung für die Federungseinrichtung 12 bei gesperrter Achspendelung erfolgt.

Das Ventilgehäuse 24 weist ein Hauptgehäuseteil 30 auf, durch das sich ein Durchgang 32 erstreckt, in dem der Ventilkolben 26 entlang seiner Längsachse 34 längsverfahrbar geführt ist. An seinem einen Endbereich 36 ist der Durchgang 32 des Hauptgehäuseteils 30 in Richtung von dem Ventilkolben 26 weg unter Ausbildung einer Stufe 38 und einer der Stufe 38 nachfolgenden konischen Erweiterung 40 im Innendurchmesser 42 erweitert. Die konische Erweiterung 40 ist im Mittenbereich der Durchgangserweiterung 44 zwischen der Stufe 38 und dem einen Ende 46 des Durchgangs 32 des Hauptgehäuseteils 30 vorgesehen. In dem Bereich der Durchgangserweiterung 44 des Hauptgehäuseteils 30 ist der Ventilkolben 26 von dem Hauptgehäuseteil 30 beabstandet.

In die Durchgangserweiterung 44 ist ein Einsatzteil 48 als Teil des Ventilgehäuses 24 eingebracht. Das Einsatzteil 48 weist in Richtung von dem Ventilkolben 26 weg eine Erweiterung seines Außendurchmessers entsprechend der konischen Innenumfangserweiterung 40 des Durchganges 32 des Hauptgehäuseteils 30 und einen endseitigen, ringförmigen Vorsprung 52 auf, der sich von dem dem Ventilkolben 26 abgewandten Ende 60 des Einsatzteils 48 in Radialrichtung vollumfänglich weg erstreckt. Der Außendurchmesser 53 des ringförmigen Vorsprungs 52 des Einsatzteils 48 ist größer als der größte Innendurchmesser 42 des Durchgangs 32 des Hauptgehäuseteils 30. In einem Zustand, in dem das Einsatzteil 48 über eine Gewindestrecke 54 in dem Hauptgehäuseteil 30 festgelegt ist, ist das Einsatzteil 48 mit seinem ringförmigen Vorsprung 52 in Anlage mit einer Außenwand 56 des Hauptgehäuseteils 30 und mit seinem dem Ventilkolben 26 zugewandten stirnseitigen Ende 58 in Anlage an der Stufe 38 des Durchgangs 32 des Hauptgehäuseteils 30. Die Gewindestrecke 54 zwischen dem Einsatzteil 48 und dem Hauptgehäuseteil 30 ist in Axialrichtung gesehen zwischen der konischen Durchgangserweiterung 40 und dem dem Ventilkolben 26 abgewandten Ende 60 des Durchgangs 32 des Hauptgehäuseteils 30 vorgesehen. In den Außenumfang 61 des Einsatzteils 48 ist zwischen seinem dem Ventilkolben 26 zugewandten Ende 58 und seinem Mittenbereich eine Ringnut 62 eingebracht, in der ein Dichtring 64 vorgesehen ist, der in abdichtender Anlage mit dem Hauptgehäuseteil 30 ist.

Das Einsatzteil 48 weist auf seiner dem Ventilkolben 26 abgewandten Seite 65 einen Tank- oder Rücklaufanschluss T auf, von dem ausgehend sich ein zentraler Fluidkanal 68 in Axialrichtung zum Ventilkolben 26 hin durch das Einsatzteil 48 erstreckt. An dem dem Ventilkolben 26 zugewandten Ende 58 des Einsatzteils 48 ist der Innendurchmesser 73 des Einsatzteils 48 zur Aufnahme eines weiteren Dichtringes 72 stufenförmig erweitert. An die stufenförmige Innendurchmessererweiterung des Fluidkanals 68 schließt sich in Richtung zu dem endseitigen Vorsprung 52 des Einsatzteils 48 hin eine erste ringförmige Innendurchmesserverringerung 74 des Einsatzteils 48 zur Führung des Ventilkolbens 26 an mit einem Innendurchmesser, der geringfügig größer ist als der Außendurchmesser 76 des Ventilkolbens 26. Darauffolgend ist unter Zwischenanordnung eines Bereichs mit gegenüber der ersten Durchmesserverringerung 74 größerem, konstantem Innendurchmesser eine zweite ringförmige Innendurchmesserverringerung 80 des Einsatzteils 48 als Endanschlag für den Ventilkolben 26 vorgesehen, die einen kleineren Innendurchmesser als den Außendurchmesser 76 des Ventilkolbens 26 aufweist.

Der Ventilkolben 26 weist in seinem Mittenbereich in Axialrichtung voneinander beabstandet eine erste 82, eine zweite 84 und eine dritte 86 ringförmige Aussparung auf, gesehen ausgehend von seinem dem Einsatzteil 48 zugewandten Ende 87 in Richtung seines dem Einsatzteil 48 abgewandten Endes 89. Im Längsschnitt gesehen, ist jede Aussparung 82, 84, 86 wannen- oder U-förmig ausgeformt. So weist jede Aussparung 82, 84, 86 des Ventilkolbens 26 im Längsschnitt gesehen eine Grundseite 88 auf, von deren Enden sich jeweils ein in Axialrichtung nach außen und gleichzeitig in Radialrichtung verlaufendes schräges Seitenwandteil 90 sowie ein sich daran anschließendes nur in Radialrichtung erstreckendes radiales Seitenwandteil 92 wegerstrecken. Der Übergang des jeweiligen radialen Seitenwandteils 92 einer jeweiligen Aussparung 82, 84, 86 zum vollen bzw. größten Außendurchmesser 76 des Ventilkolbens 26 bildet eine erste 94 und eine zweite 96 Steuerkante dieser Aussparung 82, 84, 86 aus, gesehen ausgehend von seinem dem Einsatzteil 48 zugewandten Ende 87 in Richtung seines dem Einsatzteil 48 abgewandten Endes 89.

An dem Ventilgehäuse 24 sind eine erste 16 und eine vierte 22 Fluidanschlussstelle für die Hydrospeichereinrichtung 10 und eine zweite 18 und eine dritte 20 Fluidanschlussstelle für die Federungseinrichtung 12 vorgesehen. Die Fluidanschlussstellen 16, 22 für die Hydrospeichereinrichtung 10 und die Fluidanschlussstellen 18, 20 für die Federungseinrichtung 12 sind von einer in Fig. 3 dargestellten Schnittebene schneidbar, in der die Längsachse 34 des Ventilkolbens 26 liegt, wobei die Fluidanschlussstellen 16, 22 für die Hydrospeichereinrichtung 10 auf der einen Seite der Längsachse 34 und die Fluidanschlussstellen 18, 20 für die Federungseinrichtung 12 auf der anderen Seite der Längsachse 34 angeordnet sind.

Die Hydrospeichereinrichtung 10 weist zwei Hydrospeicher 98, 100 auf, die gleich ausgebildet sind. Der eine Hydrospeicher 98 ist mit seiner Flüssigkeitsseite über eine erste Fluidleitung 102 an die erste Fluidanschlussstelle 16 und der andere Hydrospeicher 100 ist mit seiner Flüssigkeitsseite über eine vierte Fluidleitung 104 an die vierte Fluidanschlussstelle 22 fluidführend angeschlossen. In der ersten 102 und der vierten 104 Fluidleitung ist jeweils eine Blende 106 vorgesehen.

Die Federungseinrichtung 12 weist zwei Federungszylinder 108, 110 auf. Der eine Federungszylinder 108 ist mit seiner Kolbenseite über eine zweite Fluidleitung 109 an die zweite Fluidanschlussstelle 18 und der andere Federungszylinder 110 ist mit seiner Kolbenseite über eine dritte Fluidleitung 111 an die dritte Fluidanschlussstelle 20 fluidführend angeschlossen. Der eine Federungszylinder 108 dient zur Federung des einen Rades der Vorderachse und der andere Federungszylinder 110 dient zur Federung des anderen Rades der Vorderachse.

Von jeder Fluidanschlussstelle 16, 18, 20, 22 ausgehend erstreckt sich jeweils ein Fluidkanal 112 durch das Ventilgehäuse 24 zu dem Ventilkolben 26 hin und mündet in einem ersten 114, zweiten 116, dritten 118 und vierten 120 Steuerraum im Ventilgehäuse 24 aus, gesehen ausgehend von dem Ende 56 des Ventilgehäuses 24 mit dem Einsatzteil 48 in Richtung seines dem Einsatzteil 48 abgewandten Endes 123. Im Konkreten ist die erste Fluidanschlussstelle 16 mit dem ersten Steuerraum 114, die zweite Fluidanschlussstelle 18 mit dem zweiten Steuerraum 116, die dritte Fluidanschlussstelle 20 mit dem dritten Steuerraum 118 und die vierte Fluidanschlussstelle 22 mit dem vierten Steuerraum 120 fluidführend verbunden. Jeder Steuerraum 114, 116, 118, 120 ist als Teil des Durchgangs 32 durch das Ventilgehäuse 24 koaxial zu der Längsachse 34 des Ventilkolbens 26 angeordnet und weist einen gegenüber dem Innendurchmesser 42 von Führungssteilen 124, 126, 128 des Durchgangs 32 zum Führen des Ventilkolbens 26, die insbesondere jeweils zwischen zwei benachbarten Steuerräumen 114, 116, 118, 120 vorgesehen sind, größeren Innendurchmesser auf. So erstreckt sich der Ventilkolben 26 durch jeden der Steuerräume 114, 116, 118, 120 hindurch.

An das Ventilgehäuse 24 schließt sich auf der dem Einsatzteil 48 abgewandten, fluidanschlussfreien Seite 123 ein Antriebsgehäuse 132 an, in dem der Elektromotor 28 derart angeordnet ist, dass eine fiktive Verlängerung seiner Antriebsachse die Längsachse 34 des Ventilkolbens 26 senkrecht schneidet. In dem Antriebsgehäuse 132 ist ein Getrieberaum 134 vorgesehen, in dem ein mittels des Elektromotors 28 antreibbares Antriebsritzel 136 mit einer Zahnstange 138 des Ventilkolbens 26 kämmt. Die Zahnstange 138 ist an den dem Einsatzteil 48 abgewandten Endbereich 146 des Ventilkolbens 26 befestigt und erstreckt sich von diesem in Axialrichtung weg in den Getrieberaum 134 hinein. Antriebsritzel 136 und Zahnstange 138 bilden zusammen einen Ritzeltrieb.

Die Antriebswelle des Elektromotors 28 ist mit dem Antriebsritzel 136 über ein Planetenradgetriebe wirkverbunden, das in einem zwischen dem Elektromotor 28 und dem Antriebsritzel 136 angeordneten, in den Figuren nicht dargestellten Getriebegehäuse im Antriebsgehäuse 130 vorgesehen ist. Derartige Planetenradgetriebe sind aus dem Stand der Technik bekannt. Diesbezüglich wird auf die DE 10 2015 015 685 A1 verwiesen.

Mittels des Elektromotors 28 ist der Ventilkolben 26 in zwei gegenläufig zueinander angeordnete Verfahrrichtungen im Ventilgehäuse 24 verfahrbar.

Zwischen dem vierten Steuerraum 120 und dem dem Antriebsgehäuse 132 zugewandten Ende 123 des Ventilgehäuses 24 ist der Innendurchmesser 42 des Durchgangs 32 unter Ausbildung einer Ringnut 142 erweitert, in der ein weiterer Dichtring 144 vorgesehen ist. An seinem dem Antriebsgehäuse 132 zugewandten Endbereich 146 ist der Ventilkolben 26 in Richtung des Antriebsgehäuses 132 unter Ausbildung einer konischen Durchmesserverringerung 148 im Außendurchmesser 76 verringert. An das dem Antriebsgehäuse 132 zugewandte Ende 89 des Ventilkolbens 26 ist ein Fortsatz 150 angeformt, der einen sich senkrecht zur Längsachse 34 des Ventilkolbens 26 erstreckenden weiteren Durchgang 152 aufweist. Der weitere Durchgang 152 dient zum Eingreifen eines Betätigungsteils einer in den Figuren nicht dargestellten Notbetätigungseinrichtung. Derartige Notbetätigungseinrichtungen sind aus dem Stand der Technik bekannt. Diesbezüglich wird auf die DE 10 2015 015 685 A1 verwiesen.

Durch den Ventilkolben 26 erstreckt sich ausgehend von seinem dem Einsatzteil 48 zugewandten Ende 87 in Richtung des Antriebsgehäuses 132 ein zentraler Längskanal 154, der in dem dem Antriebsgehäuse 132 zugewandten, im Außendurchmesser 76 verringerten Endbereich 146 des Ventilkolbens 26 in einen Querkanal 156 übergeht, dessen beide Enden in diesem Bereich 146 aus dem Ventilkolben 26 in den Getrieberaum 134 einmünden. Über die dahingehende Kanalführung 154, 156 im Ventilkolben 26 und über den Fluidkanal 68 im Einsatzteil 48 ist der Getrieberaum 134 fluidführend mit dem Tank- oder dem Rücklaufanschluss T verbunden zwecks Herstellen eines Druckausgleichs.

An die fluidführenden Verbindungen 112, 109, 111 zwischen dem Ventilkolben 26 und dem jeweiligen Federungszylinder 108, 110 ist jeweils ein in den Figuren nicht dargestellter Drucksensor angeschlossen. Die mittels der Drucksensoren erfassten Sensorinformationen werden einer in den Figuren nicht gezeigten Recheneinheit zugeführt, die im Sinne einer integrierten Elektronik in dem Antriebsgehäuse 132 vorgesehen ist und mittels der der Elektromotor 28 ansteuerbar ist. Zum Bestromen der Recheneinheit und des Elektromotors 28 und zur Übermittlung von Steuerbefehlen an die Recheneinheit weist das Antriebsgehäuse 132 ein Steckerteil 158 auf.

In der in Fig. 3 dargestellten vierten Funktionsstellung 4 des Proportionalventils 14 ist in Axialrichtung gesehen der Führungsteil 124 zwischen dem ersten 114 und dem zweiten 116 Steuerraum im Bereich der Grundseite 88 der ersten Aussparung 82, der Führungsteil 126 zwischen dem zweiten 116 und dem dritten 118 Steuerraum im Bereich der Grundseite 88 der zweiten Aussparung 84 und der Führungsteil 128 zwischen dem dritten 118 und dem vierten 120 Steuerraum im Bereich der Grundseite 88 der dritten Aussparung 86 angeordnet. Dadurch ist eine strömungsquerschnittsverengungsfreie, fluidführende Verbindung zwischen jedem Hydrospeicher 98 oder Federungszylinder 108 zu jedem anderen Hydrospeicher 100 oder Federungszylinder 110 ermöglicht, so dass in dieser Verfahrstellung des Ventilkolbens 26 sowohl die Achspendelung als auch die Federung aktiviert sind.

In der ersten Funktionsstellung 1 des Proportionalventils 14 ist der Ventilkolben 26 in seine eine Endstellung in Richtung des Einsatzteils 48 verfahren, in der dieser an der zweiten ringförmigen Innendurchmesserverringerung 80 des Einsatzteils 48 in Anlage ist. In dieser Verfahrstellung ist der Führungsteil 124 des Durchgangs 32 zwischen dem ersten 114 und dem zweiten 116 Steuerraum in führender Anlage an dem vollen Außendurchmesser 76 des Ventilkolbens 26 zwischen seiner ersten 82 und zweiten 84 Aussparung. Genauso ist in dieser Verfahrstellung der Führungsteil 128 zwischen dem dritten 118 und dem vierten 120 Steuerraum in führender Anlage an dem vollen Außendurchmesser 76 des Ventilkolbens 26 an seinem dem Antriebsgehäuse 132 zugewandten Endbereich 146. Dadurch ist die jeweilige fluidführende Verbindung zwischen der Hydrospeichereinrichtung 10 und der Federungseinrichtung 12 sowie zwischen den Hydrospeichern 98, 100 gesperrt, wodurch die Federung gesperrt ist. Zudem ist die zweite Aussparung 84 des Ventilkolbens 26 in Axialrichtung gesehen mit ihrer Grundseite 88 im Bereich des Führungsteils 126 zwischen dem zweiten 116 und dem dritten 118 Steuerraum angeordnet, so dass eine strömungsquerschnittsverengungsfreie, fluidführende Verbindung zwischen den beiden Federungszylindern 108, 110 der Federungseinrichtung 12 hergestellt ist. Somit ist bei gesperrter Federung eine Achspendelung ermöglicht.

In der dritten Funktionsstellung 3 des Proportionalventils 14 ist der Ventilkolben 26 in Axialrichtung gesehen mit seinem vollen Durchmesser 76 zwischen der ersten 82 und der zweiten 84 Aussparung gegenüber dem Führungsteil 124 zwischen dem ersten 114 und dem zweiten 116 Steuerraum geringfügig in Richtung des Antriebsgehäuses 132 versetzt angeordnet, so dass sich dieses Führungsteil 124 im Bereich der schrägen Seitenwand 90 der ersten Aussparung 82 befindet. Dadurch bildet dieses Führungsteil 124 mit der benachbarten zweiten Steuerkante 96 der ersten Aussparung 82 eine Blende, die den Strömungsquerschnitt zu und von dem einen Hydrospeicher 98 verengt. Genauso ist in Axialrichtung gesehen der volle Durchmesser 76 des Ventilkolbens 26 an dem dem Antriebsgehäuse 132 zugewandten Endbereich 146 des Ventilkolbens 26 in Richtung des Antriebsgehäuses 132 geringfügig versetzt zu dem Führungsteil 128 zwischen dem dritten 118 und dem vierten 120 Steuerraum angeordnet, das sich im Bereich der schrägen Seitenwand 90 der dritten Aussparung 86 befindet. Dadurch bildet dieses Führungsteil 128 mit der benachbarten zweiten Steuerkante 96 der dritten Aussparung 86 eine weitere Blende, die den Strömungsquerschnitt zu und von dem anderen Hydrospeicher 100 verengt. Dadurch ist ein Druckausgleich zwischen der Hydrospeichereinrichtung 10 und der Federungseinrichtung 12 ermöglicht. Zudem ist das Führungsteil 126 zwischen dem zweiten 116 und dem dritten 118 Steuerraum in Axialrichtung gesehen im Bereich der Grundseite 88 der zweiten Aussparung 84 angeordnet. Dadurch ist eine strömungsquerschnittsverengungsfreie, fluidführende Verbindung von und zu jedem Federungszylinder 108, 110 hergestellt, so dass die Achspendelung und ein Druckausgleich zwischen der Hydrospeichereinrichtung 10 und der Federungseinrichtung 12 ermöglicht ist.

In der zweiten Funktionsstellung 2 des Proportionalventils 14 ist in Axialrichtung gesehen der Führungsteil 124 zwischen dem ersten 114 und dem zweiten 116 Steuerraum im Bereich der Grundseite 88 der ersten Aussparung 82, der Führungsteil 126 zwischen dem zweiten 116 und dem dritten 118 Steuerraum in führender Anlage mit dem vollen Durchmesser 76 des Ventilkolbens 26 zwischen der ersten 82 und der zweiten 84 Aussparung und der Führungsteil 128 zwischen dem dritten 118 und dem vierten 120 Steuerraum im Bereich der Grundseite 88 der dritten Aussparung 86 angeordnet. Dadurch ist eine strömungsquerschnittsverengungsfreie, fluidführende Verbindung zwischen dem einen Federungszylinder 108 und dem einen Hydrospeicher 98 sowie eine weitere strömungsquerschnittsverengungsfreie, fluidführende Verbindung zwischen dem anderen Federungszylinder 110 und dem anderen Hydrospeicher 100 hergestellt, wobei die fluidführende Verbindung und die weitere fluidführende Verbindung voneinander getrennt sind. Somit ist bei gesperrter Achspendelung die Federung ermöglicht.

In der fünften, zusätzlichen Funktionsstellung 5 des Proportionalventils 14 ist der Ventilkolben 26 in Axialrichtung gesehen mit seinem vollen Durchmesser 76 an seinem dem Einsatzteil 48 zugewandten Endbereich gegenüber dem Führungsteil 124 zwischen dem ersten 114 und dem zweiten 116 Steuerraum geringfügig in Richtung des Einsatzteils 48 versetzt angeordnet, so dass sich dieses Führungsteil 124 im Bereich der schrägen Seitenwand 90 der ersten Aussparung 82 befindet. Dadurch bildet dieses Führungsteil 126 mit der benachbarten ersten Steuerkante 94 der ersten Aussparung 82 eine Blende, die den Strömungsquerschnitt zu und von dem einen Hydrospeicher 98 verengt, der über die Blende mit dem einen Federungszylinder 108 fluidführend verbunden ist. Genauso ist in Axialrichtung gesehen der volle Durchmesser 76 des Ventilkolbens 26 zwischen der zweiten 84 und der dritten Aussparung 86 in Richtung des Einsatzteils 48 geringfügig versetzt zu dem Führungsteil 128 zwischen dem dritten 118 und dem vierten 120 Steuerraum angeordnet, das sich im Bereich der schrägen Seitenwand 90 der dritten Aussparung 86 befindet. Dadurch bildet dieses Führungsteil 128 mit der benachbarten ersten Steuerkante 94 der dritten Aussparung 86 eine weitere Blende, die den Strömungsquerschnitt zu und von dem anderen Hydrospeicher 100 verengt, der über die weitere Blende mit dem anderen Federungszylinder 110 fluidführend verbunden ist. Die Blende und die weitere Blende wirken in der jeweiligen Fluidverbindung dämpfend. Zudem ist das Führungsteil 126 zwischen dem zweiten 116 und dem dritten 118 Steuerraum in Axialrichtung gesehen in führender Anlage mit dem vollen Außendurchmesser 76 des Ventilkolbens 26 zwischen der ersten 82 und der zweiten Aussparung 84. Dadurch ist die fluidführende Verbindung zwischen dem einen Hydrospeicher 98 und dem einen Federungszylinder 108 von der weiteren fluidführenden Verbindung zwischen dem anderen Hydrospeicher 100 und dem anderen Federungszylinder 110 voneinander getrennt. Somit ist eine proportionale Dämpfung der Federung bei gesperrter Achspendelung ermöglicht.

In dem Antriebsgehäuse 132 kann eine in den Figuren nicht dargestellte, einstellbare Anschlageinrichtung für den Ventilkolben 26 vorgesehen sein, die den Maximalhub des Ventilkolbens 26 begrenzt. Zudem können in den Außenumfang des Ventilkolbens in dessen Bereichen mit vollem Außendurchmesser 76 in den Figuren nicht gezeigte Steuernuten eingebracht sein, die sich ausgehend von dessen jeweiliger Aussparung 82, 84, 86 in Axialrichtung, insbesondere keilförmig zulaufend, wegerstrecken. Eine derartige Anschlageinrichtung und solche Steuernuten sind aus dem Stand der Technik bekannt. Diesbezüglich wird auf die DE 10 2017 004 531 A1 verwiesen.

Fig. 2 zeigt ein zweites Ausführungsbeispiel der erfindungsgemäßen Ansteuervorrichtung, das sich von dem ersten Ausführungsbeispiel, das in Fig. 1 und 3 gezeigt ist, lediglich wie folgt unterscheidet:
Bei dem zweiten Ausführungsbeispiel weist das Ventilgehäuse 24 zwei zusätzliche Fluidanschlussstellen 174, 178 auf, die mittels des Ventilkolbens 26 ansteuerbar sind. An die eine zusätzliche Fluidanschlussstelle 174 ist über eine fünfte Fluidleitung 176 die Kolbenseite des einen Federungszylinders 108 und an die andere zusätzliche Fluidanschlussstelle 178 ist über eine sechste Fluidleitung 180 die Kolbenseite des anderen Federungszylinders 110 angeschlossen. In seiner ersten, seiner zweiten und seiner dritten Funktionsstellung verbindet der Ventilkolben 26 die beiden zusätzlichen Fluidanschlussstellen 174, 178 miteinander, wohingegen in seiner vierten und seiner fünften Funktionsstellung der Ventilkolben 26 die beiden zusätzlichen Fluidanschlussstellen 174, 178 voneinander trennt.

Die dahingehende mittels des Ventilkolbens 26 hergestellte fluidführende Verbindung oder Trennung zwischen den zusätzlichen Fluidanschlussstellen 174, 178 des zweiten Ausführungsbeispiels ersetzt die fluidführende Verbindung zwischen dem einen Hydrospeicher 98 und dem anderen Hydrospeicher 100 oder dem einen Federungszylinder 108 und dem anderen Federungszylinder 110 des ersten Ausführungsbeispiels. Hinsichtlich der fluidführenden Verbindung zwischen dem einen Hydrospeicher 98 und dem einen Federungszylinder 108 sowie der weiteren fluidführenden Verbindung zwischen dem anderen Hydrospeicher 100 und dem anderen Federungszylinder 110 entsprechen die Funktionsstellungen des zweiten Ausführungsbeispiels denen des ersten Ausführungsbeispiels.

## Patentansprüche

1. Ansteuervorrichtung für eine pendelnd ausgeführte Achsfederung, insbesondere Vorderachsfederung, die Ansteuervorrichtung bestehend aus mindestens einer Hydrospeichereinrichtung (10), einer Federungseinrichtung (12) und einem einen Ventilkolben (26) aufweisenden Proportionalventil (14), an das über Fluidanschlussstellen (16, 18, 20, 22) die beiden Einrichtungen (10, 12) angeschlossen sind, wobei der Ventilkolben (26) von einem Elektromotor (28) betätigbar in einem Ventilgehäuse (24) des Proportionalventils (14) längsverfahrbar geführt ist und derart die Fluidanschlussstellen (16, 18, 20, 22) ansteuert, dass in mindestens einer Funktionsstellung (1) des Ventilkolbens (26) bei gesperrter Federung die Achspendelung und in mindestens einer weiteren zweiten Funktionsstellung (2) des Ventilkolbens (26) bei gesperrter Achspendelung die Federung erfolgt und in einer weiteren dritten Funktionsstellung (3) des Ventilkolbens (26) die Achspendelung und ein Druckausgleich zwischen der Hydrospeichereinrichtung (10) und der Federungseinrichtung (12) erfolgen.

2. Ansteuervorrichtung nach Anspruch 1, **dadurch gekennzeichnet, dass** in einer weiteren vierten Funktionsstellung (4) des Ventilkolbens (26) sowohl die Achspendelung als auch die Federung erfolgt.

3. Ansteuervorrichtung nach Anspruch 1 oder 2, **dadurch gekennzeichnet, dass** in einer optionalen, zusätzlichen Funktionsstellung (5) eine proportionale Dämpfung für die Federungseinrichtung (12) bei gesperrter Achspendelung erfolgt.

4. Ansteuervorrichtung nach einem der vorstehenden Ansprüche, **dadurch gekennzeichnet, dass** die Hydrospeichereinrichtung (10) aus zwei, vorzugsweise gleich ausgebildeten, Hydrospeichern (98, 100) gebildet ist, die mit ihrer Flüssigkeitsseite an jeweils eine Fluidanschlussstelle (16, 22) im Ventilgehäuse (24) angeschlossen sind, und dass der Ventilkolben (26) die jeweilige fluidführende Verbindung zu zwei weiteren Fluidanschlussstellen (18, 20) im Ventilgehäuse (24) ansteuert, an die jeweils ein Federungszylinder (108, 110) der Federungseinrichtung (12), vorzugsweise mit seiner Kolbenseite, angeschlossen ist.

5. Ansteuervorrichtung nach Anspruch 4, **dadurch gekennzeichnet, dass** das Ventilgehäuse (24) zwei zusätzliche mittels des Ventilkolbens (26) ansteuerbare und in mindestens einer der Funktionsstellungen sperrbare Fluidanschlussstellen (174, 178) aufweist, von denen eine an die Kolbenseite des einen Federungszylinders (108) und die andere an die Kolbenseite des anderen Federungszylinders (110) angeschlossen ist.

6. Ansteuervorrichtung nach einem der vorstehenden Ansprüche, **dadurch gekennzeichnet, dass** der Elektromotor (28) über ein in einem Getrieberaum (134) angeordnetes Getriebe an einem Ritzeltrieb (136, 138) des Ventilkolbens (26) angreift, der von einem Längskanal (154) durchgriffen einen Druckausgleich zwischen dem Getrieberaum (134) und einem Tank- oder Rücklaufanschluss (T) im Ventilgehäuse (24) herstellt.

7. Ansteuervorrichtung nach einem der Ansprüche 4 bis 5, **dadurch gekennzeichnet, dass** der Elektromotor (28) von einer Rechnereinheit ansteuerbar ist, die zumindest Sensorinformationen von mindestens zwei Drucksensoren erhält, die jeweils in eine fluidführende Verbindung zwischen dem Ventilkolben (26) und dem jeweiligen Federungszylinder (108, 110) und/oder dem Ventilkolben (26) und dem jeweiligen Hydrospeicher (98, 100) geschaltet sind.

8. Ansteuervorrichtung nach einem der vorstehenden Ansprüche, **dadurch gekennzeichnet, dass** der Elektromotor (28) den Ventilkolben (26) in zwei gegenläufig zueinander angeordnete Verfahrrichtungen im Ventilgehäuse (24) verfährt.

9. Ansteuervorrichtung nach einem der vorstehenden Ansprüche, **dadurch gekennzeichnet, dass** der Elektromotor (28) mit seinem Getriebegehäuse in einem Antriebsgehäuse (132) aufgenommen an einer Stirnseite (123) des Ventilgehäuses (24) von Fluidanschlussstellen freigelassen angeordnet ist.

10. Ansteuervorrichtung nach einem der vorstehenden Ansprüche, **dadurch gekennzeichnet, dass** der Ventilkolben (26) so lange in seiner aktuellen Funktionsstellung (1 bis 5) verbleibt bis dieser mittels des Elektromotors (28) in eine andere Stellung gebracht wird.

## Claims

1. Control device for an oscillating axle suspension, in particular a front axle suspension, consisting of at least one hydraulic accumulator apparatus (10), a suspension apparatus (12) and a proportional valve (14) comprising a valve piston (26), the two apparatuses (10, 12) being connected to said proportional valve (14) via fluid connection ports (16, 18, 20, 22), the valve piston (26) being able to be actuated by an electric motor (28), being guided such that it can be displaced longitudinally in a valve housing (24) of the proportional valve (14) and controlling the fluid connection ports (16, 18, 20, 22) such that, in at least one functional position (1) of the valve piston (26), axle oscillation is active while suspension is blocked and, in at least one further second functional position (2) of the valve piston (26), suspension is active while axle oscillation is blocked, and in a further third functional position (3) of the valve piston (26), axle oscillation and pressure compensation between the hydraulic accumulator apparatus (10) and the suspension apparatus (12) are active.

2. Control device according to claim 1, **characterised in that**, in a further fourth functional position (4) of the valve piston (26), both axle oscillation and suspension are active.

3. Control device according to either claim 1 or claim 2, **characterised in that**, in an optional, additional functional position (5), proportional damping for the suspension apparatus (12) is active while axle oscillation is blocked.

4. Control device according to any of the preceding claims, **characterised in that** the hydraulic accumulator apparatus (10) is formed from two hydraulic accumulators (98, 100), preferably of identical design, the liquid ends of which are each connected to a fluid connection port (16, 22) in the valve housing (24), and **in that** the valve piston (26) controls the respective fluid-conveying connection to two further fluid connection ports (18, 20) in the valve housing (24), to each of which a suspension cylinder (108, 110) of the suspension apparatus (12) is connected, preferably with its piston end.

5. Control device according to claim 4, **characterised in that** the valve housing (24) has two additional fluid connection ports (174, 178), which can be controlled by means of the valve piston (26) and which can be blocked in at least one of the functional positions, one of said additional fluid connection ports (174, 178) being connected to the piston end of one suspension cylinder (108) and the other to the piston end of the other suspension cylinder (110).

6. Control device according to any of the preceding claims, **characterised in that** the electric motor (28) acts on a pinion drive (136, 138) of the valve piston (26) via a gear arranged in a gear chamber (134), said valve piston (26) being penetrated by a longitudinal duct (154) and establishing pressure compensation between the gear chamber (134) and a tank or return port (T) in the valve housing (24).

7. Control device according to either claim 4 or claim 5, **characterised in that** the electric motor (28) can be controlled by a computer unit, which receives at least sensor information from at least two pressure sensors, each of which is installed in a fluid-conveying connection between the valve piston (26) and the respective suspension cylinder (108, 110) and/or the valve piston (26) and the respective hydraulic accumulator (98, 100).

8. Control device according to any of the preceding claims, **characterised in that** the electric motor (28) moves the valve piston (26) in two opposite displacement directions in the valve housing (24).

9. Control device according to any of the preceding claims, **characterised in that** the electric motor (28) and its gear housing are accommodated in a drive housing (132) and are arranged on one end face (123) of the valve housing (24) that is free from fluid connection ports.

10. Control device according to any of the preceding claims, **characterised in that** the valve piston (26) remains in its current functional position (1 to 5) until it is moved into another position by means of the electric motor (28).

## Revendications

1. Installation de commande d'une suspension d'essieu réalisée de manière oscillante, en particulier d'une suspension d'essieu avant, l'installation de commande consistant en au moins un dispositif (10) d'accumulateur hydraulique, un dispositif (12) de suspension et une soupape (14) proportionnelle, qui a un piston (26) de soupape et à laquelle les deux dispositifs (10, 12) sont raccordés par des points (16, 18, 20, 22) de raccordement de fluide, dans laquelle le piston (26) de la soupape est, avec possibilité d'être actionné par un moteur (28) électrique, guidé avec possibilité de se déplacer longitudinalement dans un corps (24) de la soupape (14) proportionnelle et commande les points (16, 18, 20, 22) de raccordement de fluide, de manière à ce que, dans au moins une position (1) de fonctionnement du piston (26) de la soupape alors que la suspension est bloquée, ait lieu l'oscillation de l'essieu et, dans au moins une autre deuxième position (2) de fonctionnement du piston (26) de la soupape alors que l'oscillation de l'essieu est bloquée, ait lieu la suspension et, dans une autre troisième position (3) de fonctionnement du piston (26) de la soupape, ait lieu l'oscillation de l'essieu et une compensation de la pression entre le dispositif (10) accumulateur hydraulique et le dispositif (12) de suspension.

2. Installation de commande suivant la revendication 1, **caractérisée en ce que**, dans une autre quatrième position (4) de fonctionnement du piston (26) de la soupape, ont lieu à la fois l'oscillation de l'essieu et la suspension.

3. Installation de commande suivant la revendication 1 ou 2, **caractérisée en ce que**, dans une position (5) de fonctionnement supplémentaire optionnelle, un amortissement proportionnel du dispositif (12) de suspension a lieu alors que l'oscillation de l'essieu est bloquée.

4. Installation de commande suivant l'une des revendications précédentes, **caractérisée en ce que** le dispositif (10) accumulateur hydraulique est formé de deux accumulateurs (98, 100) hydrauliques, de préférence de même constitution, qui, par leur côté liquide, sont raccordés à respectivement un point (16, 22) de raccordement de fluide dans le corps (24) de la soupape, et **en ce que** le piston (26) de la soupape commande la communication fluidique respective vers deux autres points (18, 20) de raccordement de fluide dans le corps (24) de la soupape, où respectivement un vérin (108, 110) de suspension du dispositif (12) de suspension est raccordé, de préférence par son côté piston.

5. Installation de commande suivant la revendication 4, **caractérisée en ce que** le corps (24) de la soupape a deux points (174, 178) de raccordement de fluide supplémentaires pouvant être commandés au moyen du piston (26) de la soupape et pouvant être barrés dans au moins l'une des positions de fonctionnement, dont l'un est raccordé au côté piston du un vérin (108) de la suspension et dont l'autre est raccordé au côté piston de l'autre vérin (110) de la suspension.

6. Installation de commande suivant l'une des revendications précédentes, **caractérisée en ce que** le moteur (28) électrique attaque, par un engrenage disposé dans un espace (134) d'engrenage, un pignon (136, 138) du piston (26) de la soupape qui, traversé par un conduit (154) longitudinal, ménage une compensation de la pression entre l'espace (134) d'engrenage et un raccord (T) de réservoir ou de retour du corps (24) de la soupape.

7. Installation de commande suivant l'une des revendications 4 à 5, **caractérisée en ce que** le moteur (28) électrique peut être commandé par une unité informatique, qui reçoit au moins des informations de capteur d'au moins deux capteurs de pression, qui sont montés respectivement en communication fluidique entre le piston (26) de la soupape et le vérin (108, 110) respectif de la suspension et/ou entre le piston (26) de la soupape et l'accumulateur (98, 100) hydraulique respectif.

8. Installation de commande suivant l'une des revendications précédentes, **caractérisée en ce que** le moteur (28) électrique déplace le piston (26) de la soupape dans le corps (24) de la soupape dans deux sens de déplacement contraires l'un à l'autre.

9. Installation de commande suivant l'une des revendications précédentes, **caractérisée en ce que** le moteur (28) électrique est, en étant reçu par sa carcasse d'engrenage dans une carcasse (132) d'entraînement, monté sur un côté (123) frontal du corps (24) de la soupape en étant dégagé de points de raccordement de fluide.

10. Installation de commande suivant l'une des revendications précédentes, **caractérisée en ce que** le piston (26) de la soupape reste dans sa position (1 à 5) de fonctionnement en cours jusqu'à ce qu'il soit mis en une autre position au moyen du moteur (28) électrique.
